# EUROPEAN PATENT SPECIFICATION

(11) **EP 4 171 200 B1**
(45) Date of publication and mention of the grant of the patent: **14.05.2025**
(21) Application number: 21749764.3
(22) Date of filing: 02.07.2021
(51) Int. Cl.: A01G 24/35, A01G 24/48

(54) **SUPER ABSORBENT POLYMERIC FOAM**
SUPERABSORBIERENDER POLYMER SCHAUM
MOUSSE POLYMÈRE SUPER ABSORBANTE

(30) Priority: 02.07.2020 BR 102020013617
(43) Date of publication of application: 03.05.2023
(73) Proprietor: UPL Corporation Limited, Port Louis (MU); Upl Do Brasil Indústria E Comércio De Insumos Agropecuários S.A., 14500-000 Ituverava (BR)
(72) Inventor: FABRI, Carlos Eduardo, 14500-000 Ituverava (BR); HERMENEGILDO OLIVEIRA, Gilson Aparecido, 14500-000 Ituverava (BR); MARCANDALLI, Luiz Henrique, 14500-000 Ituverava (BR)
(74) Representative: Page White Farrer
(86) International application number: PCT/BR2021/050289
(87) International publication number: WO 2022/000064

(56) References cited:
- WO-A1-2016/162783
- CN-A- 105 330 805
- US-A- 3 798 836
- US-A- 3 973 355
- US-A1- 2016 242 371

## Description

### Field of invention

The present invention relates to a composition comprising super absorbent polymer and a foam. The present invention also relates to a use of said composition for growing seeds, seedlings and plants.

### Background of invention

Conventionally, seeds are laid out in sheets in a desired arrangement state. For example, various seeding sheets are circulated so that seeding and cultivation can be performed very simply by laying in a field or a nursery. Among them, there is a seeding sheet in which seeding can be performed by sticking or winding on an outer wall, a wall, a partition, or the like of a building, where seeds are grown. The seeding sheet of this type is, for example, a sheet in which light soil is laid on a vinyl sheet, and plant seeds are arranged in an arbitrary pattern. However, since such a type of seeding sheet is difficult to mass-produce and is heavy, workability is not good, and the place where it can be used is limited. Also, a large and continuous water supply is needed to keep the seedling healthy.

Foams are one of the commonly used base materials used to grow and check seedling growth and are used as seeding sheets. They provide good air passage for seeds or seedling to grow roots but water retention is less in them thus making them to easily leach out the nutrients.

JP10313687 discloses a seedling raising method, with the use of super absorbent polymer in a container with water discharge hole on the bottom with bed soil thus reducing the number of times of watering. It specifically discloses a water absorbent polymer into a container provided with a water discharge hole on the bottom, putting bed soil on it and sowing seeds to the bed soil. Further it mentions that a bed material composed of urethane foam provided with a water keeping property.US3798836 discloses a composite foam plant growth medium comprising an open cell foamed polyurethane matrix having intimately dispersed therein expanded thermoplastic particles and a water swellable crosslinked hydrophilic polymer. US3973355 discloses a self-contained hydrophilic plant growth matrix comprising an open cell foamed polymer and a water-swellable cross-linked polymer dispersed therein. US2016/242371 discloses flexible polyurethane foams comprising plant seeds. CN105330805 discloses a double-constituent polyurethane foam for planting.

Biofoams are upcoming and are substitute to pure chemically synthesized foams. These biofoams also are being explored in agriculture. Nairne et al, 2016 describes a process of growing tomato seedlings in a sugarcane derived biofoam.

However, there is a continuous need in the art to provide a sustainable, easy to use and eco-friendly solution that can minimize the water usage at the same time provide the better growth to seedling.

### Object of the invention

An object of the present invention is to solve at least the above problems and / or disadvantages and to provide at least the advantages to be described later.

An object of the present invention is to provide a composition comprising a super absorbent polymer and a biofoam.

It is another object of the present invention to provide a composition comprising a super absorbent polymer, a biofoam and a bioactive agent.

It is another object of the disclosure to provide a method to increase the water retention capacity of a biofoam using a super absorbent polymer.

It is another object of the present invention to provide a composition comprising a super absorbent polymer and a biofoam and a herbicide or a fungicide or an insecticide or a bio stimulant or a fertilizer or a microbial cell and a combinations thereof.

It is another object of the disclosure to provide a method for the production of a composition comprising a super absorbent polymer and a biofoam.

It is another object of the present invention to provide a novel method of growing seedlings with a super absorbent polymeric foam with reduced amount of water.

It is another object of the present invention to provide a method of growing seed or seedling with a super absorbent polymeric foam and a bioactive agent.

It is another object of the disclosure to provide a method for improving the delivery of a bioactive ingredient to seeds or seedlings.

### Summary of the invention

In one aspect, the present invention provides a composition according to claim 1.

Preferred features of the composition are defined in dependent claims 2 to 5.

In another aspect, the present invention provides a method of cultivation of plants according to claim 6. Preferred features of the method are defined in dependent claims 7 to 8. In a further aspect, the present invention provides a method of growing seed or seedlings with the said super absorbent polymeric foam with a reduced amount of water.

In another aspect the disclosure provides a method of growing seedling with the said super absorbent polymeric biofoam and a bioactive agent.

The disclosure can provide a method for improving delivery of a bioactive ingredient to pre-emergent seeds or seedlings.

The disclosure can provide a method to increase water retention capacity of a biofoam using super absorbent polymer.

Among the several advantages of this invention, is the economic advantage of reduced water consumption, improved uptake of nutrients by seedlings, and longer survival of plants. Thus, the present invention helps in improving the sustainability of the environment.

### Brief description of the figures:

Figure 1: Insertion of yolks in the super absorbent polymer biofoam.
Figure 2: Seedling after 30 days treatment.
Figure 3: Sample force over the period of 30 days trial:
Figure 4: Samples force (%) over the period - Test 1 (Seedlings of 45 days), 16 days samples were observed without irrigation.
Figure 5: Percentage of retained water Biofoam and super absorbent polymer in powder form.
Figure 6 Percentage of retained water Biofoam and super absorbent polymer in medium granule form.
Figure 7: Percentage of retained water Biofoam and super absorbent polymer in large granule form.

### Detailed description of the invention

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art. However, for convenience and completeness, particular terms and their meanings are set forth below.

As used herein the term 'water retention' refers to the property of an agent that is the capacity to hold water and release it as and when needed by the plant.

The terms "super absorbent polymer" or "SAP" referred herein refer to the water swellable polymers which can absorb water many times their weight in an aqueous solution. Without wishing to be bound by theory, the term super absorbent polymers also apply to polymers that absorb water as well as de-sorb the absorbed water. The super absorbent polymer may be selected from but not limited to water- swellable or water absorbing or water-retentive polymers such as cross-linked polymers that swell without dissolving in the presence of water, and may, absorb at least 10, 100, 1000, or more times their weight in water.

The term "foam" is referred to as any form of material formed from trapped gas bubbles in liquid or solids either biological or chemical in nature. Foam can also be a polyester-polyol based foams (ester-foams), polyether-polyol based foams (ether-foams), polyurethane foams, biobased polyol foam, rigid or hard foam, semi -hard foam, soft foam. The word foam also may cover bio or chemical resin, latex, soil bed, matrix that is formed by trapping gas bubbles.

The term "cultivation" as used herein refers to an activity to grow plants in any stage from the seeding stage to maturation stage. It means to artificially grow plants over the entire or in partial period from the seeding stage to the maturation stage and in each following stage or in stages by the combination of two or more of the stages such as (1) from nursery stage to maturation stage; (2) from nursery plants to maturation stage; (3) from seeds to nursery plants; (4) from the stage between before the desired maturation to the desired maturation and (5) from the nursery plants to the stage before the desired maturation.

Maturation stage includes the maturation stage in which the desired plant bodies or one of parts of fruits, flowers, leaves, buds, branches, stems, roots and bulbs of the plant bodies are at least made available to be harvested, or in which seeds or nursery plants are made available to be harvested from the plant bodies. Typically, the method of the present invention may be applied to other known varieties/species of plants.

Surprisingly the present inventors found that when a super absorbent polymer is mixed with a foam resin at the time of preparing of foam, the super absorbent polymer gets entrapped in the air spaces of foam and a super absorbent polymeric foam, referred to hereinafter as super absorbent foam, is obtained which has very high water retention capacity that can be used for growing seeds or seedlings with reduced amount of water and increases the survival rate of the seedlings without irrigation. This super absorbent foam is also referred to herein as a composition which comprises a super absorbent polymer and a foam comprising the super absorbent polymer.

Accordingly, there is provided a super absorbent foam comprising a super absorbent polymer entrapped in the air spaces of a foam.

In the present invention, the foam is a polyurethane based biofoam, which can be chemically synthesized.

The super absorbent polymer is a synthetic, degradable, polymer.

In the present invention, the super absorbent polymer is starch-g-poly(2-propenamide-co-2-propanoic acid) potassium salt.

In one embodiment, the super absorbent polymer is Zeba^{™}.

In the present invention, the foam is a polyurethane based biofoam that has a natural component in it.

In an embodiment of the present invention, the composition comprises the biofoam with partially hydrated super absorbent polymer.

In an embodiment of the present invention, the composition comprises the biofoam with hydrated super absorbent polymer.

In an embodiment of the present invention, the composition comprises biofoam with dried super absorbent polymer.

In an embodiment of the present invention, the concentration of super absorbent polymer in foam is in the range of 0.1% to 99%.

In an embodiment of the present invention, the composition further comprises a boiactive agent.

The composition of the present invention comprises a powdered or granulated polymer, starch-g-poly (2-propenamide-co-2-propanoic acid) potassium salt, and a polyurethane based biofoam.

In an embodiment of the present invention, the composition comprises powdered starch based super absorbent polymer in the range of 0.25 kg to 8 kg, more preferably in the range of 0.5 kg to 6 kg and more preferably in the range of 1 kg to 4 kg, and the foam is present in the weight of 50 kg to 10 kg, more preferably 35kg to 25 kg.

In an embodiment of the present invention, the composition comprises mid granulated starch based super absorbent polymer in the range of 0.25 kg to 20 kg, more preferably in the range of 1 kg to 15kg and more preferably in the range of 4 kg-12 kg, and a foam present in the amount of 20 kg to 10 kg, more preferably 15 kg to 11 kg.

In an embodiment of the present invention, the composition comprises large granulated starch based super absorbent polymer in the range of 0.25 kg to 20 kg, more preferably in the range of 1 kg to 15 kg and more preferably in the range of 4 kg-12 kg, and foam is present in the weight of 20 kg to 10 kg, more preferably 15 kg to 11 kg.

Also disclosed herein is a method for production of a super absorbent foam, and a method for production of a composition comprising a starch-based super absorbent polymer and a biofoam, which may further comprise a bioactive agent.

The composition of the present invention may be used for planting seeds or seedlings.

The seeds or seedlings may be treated with the composition of the present invention.

In another aspect, the present invention provides a process of planting seeds and seedlings in the composition of the present invention.

The seeds that are useful in the present invention can be the seeds of any species of plant. However, they may be the seeds of plant species that are agronomically important. In particular, the seeds can be of corn, peanut, canola/rapeseed, soybean, curcubits, crucifers, cotton, beets, rice, sorghum, coffee, citrus, sugar beet, wheat, barley, rye, sunflower, tomato, sugarcane, tobacco, oats, as well as other vegetable and leaf crops.

The process of planting seeds and seedlings may comprise the use of the super absorbent polymer foam with or without any bioactive agent.

In an embodiment, the plant bioactive agent is selected from fertilizers, mycorrihiza, micronutrients, acaricides, algicides, antifeedants, avicides, bactericides, bird repellents, chemosterilants, fungicides, herbicide safeners, herbicides, insect attractants, insect repellents, insecticides, mammal repellents, mating disruptors, molluscicides, nematicides, plant activators, plant-growth regulators, rodenticides, synergists, virucides, derivatives thereof, biological control agents and mixtures thereof.

In an embodiment, the fertilizer is selected from organic and inorganic fertilizers such as those selected from but not limited to urea, NPK, nitrogen based fertilizers, phosphate, calcium, potassium, magnesium, sulfur, copper, iron, manganese, molybdenum, zinc, nickel, cobalt, boron and their salts and derivatives.

Exemplary organic fertilizer may be selected from peat, limestone, rock phosphate, blood meal, bone meal, compost, humic acid, seaweed extracts, digested proteins, fish meal, feather meal, corn meal, alfalfa meal etc.

In an embodiment, the insecticide may be selected from organic or inorganic insecticide, natural or synthetic insecticide such as those selected from but not limited to: Acetylcholine esterase inhibitors (Carbamates, Triazemate, Organophosphates); GABA-gated chloride channel antagonists (Cyclodiene organochlorines, Phenylpyrazoles (Fiproles)); Nicotinic Acetylcholine receptor agonists (allosteric) (Spinosyns); Chloride channel activators (Avermectins, Milbemycins); Inhibitors of chitin biosynthesis, type 0, Lepidopteran (Benzoylureas); Inhibitors of chitin biosynthesis, type 1, Homopteran (Buprofezin); Moulting disruptor, Dipteran (Cyromazine ); Ecdysone agonists / moulting disruptors (Diacylhydrazines, Azadirachtin); Octopaminergic agonists (Amitraz); Neuronal inhibitors (unknown mode of action) (Bifenazate); Aconitase inhibitors (Fluoroacetate); Synergists (P450-dependent monooxygenase inhibitors, Esterase inhibitors); Ryanodine receptor modulators (diamide); Compounds with unknown mode of action (Benzoximate, Chinomethionat, Dicofol, Pyridalyl, Borax, Tartar emetic); Compounds of unknown or non-specific mode of action (fumigants) (Alkyl halides, Chloropicrin, Sulfuryl fluoride); Sodium channel modulators (DDT, Methoxychlor, Pyrethroids, Pyrethrins); Microbial disruptors of insect midgut membranes (B.t. subsp. Israelensis, B. sphaericus, B.t. subsp. Aizawai, B.t. subsp. kurstaki, B.t. subsp. tenebrionis); Mitochondrial complex IV electron transport inhibitors (Aluminium phosphide, Cyanide, Phosphine); Mitochondrial complex III electron transport inhibitors (Coupling site II) (Hydramethylnon, Acequinocyl, Fluacrypyrim); Compounds of unknown or non-specific mode of action (Clofentezine, Hexythiazox, Etoxazole); Nicotinic Acetylcholine receptor agonists / antagonists (Neonicotinoids, Nicotine, Bensultap, Cartap hydrochloride, Nereistoxin analogues); Juvenile hormone mimics (Juvenile hormone analogues, Fenoxycarb, Pyriproxyfen); Inhibitors of oxidative phosphorylation, disruptors of ATP formation (inhibitors of ATP synthase) (Diafenthiuron, Organotin miticides, Propargite, Tetradifon); Mitochondrial complex I electron transport inhibitors (METI acaricides, Rotenone); Voltage-dependent sodium channel blockers (Indoxacarb); Inhibitors of lipid synthesis (Tetronic acid derivatives); Mitochondrial complex IV electron transport inhibitors (Aluminium phosphide, Cyanide, Phosphine); Compounds of unknown or non-specific mode of action (selective feeding blockers) (Cryolite, Pymetrozine, Flonicamid); Uncouplers of oxidative phosphorylation via disruption of proton gradient (Chlorfenapyr, DNOC).

The insecticide further may be selected from the group, but not limiting to, comprising: arsenical insecticides:, calcium arsenate, copper arsenate, lead arsenate, Paris green, potassium arsenite, sodium arsenite; botanical insecticides:, allicin, anabasine, azadirachtin, carvacrol, d-limonene, matrine, nicotine, nornicotine, oxymatrine, pyrethrins, cinerins, cinerin I, cinerin II, jasmolin I, jasmolin II, pyrethrin I, pyrethrin II, quassia, rhodojaponin-III, rotenone, ryania, sabadilla, sanguinarine, triptolide; carbamate insecticides:, bendiocarb, carbaryl; benzofuranyl methylcarbamate insecticides:, benfuracarb, carbofuran, carbosulfan, decarbofuran, furathiocarb; dimethylcarbamate insecticides:, dimetan, dimetilan, hyquincarb, isolan, pirimicarb, pyramat, pyrolan; oxime carbamate insecticides:, alanycarb, aldicarb, aldoxycarb, butocarboxim, butoxycarboxim, methomyl, nitrilacarb, oxamyl, tazimcarb, thiocarboxime, thiodicarb, thiofanox; phenyl methylcarbamate insecticides:, allyxycarb, aminocarb, bufencarb, butacarb, carbanolate, cloethocarb, CPMC, dicresyl, dimethacarb, dioxacarb, EMPC, ethiofencarb, fenethacarb, fenobucarb, isoprocarb, methiocarb, metolcarb, mexacarbate, promacyl, promecarb, propoxur, trimethacarb, XMC, xylylcarb; diamide insecticides:, afoxolaner, broflanilide, chlorantraniliprole, cyantraniliprole, cyclaniliprole, cyhalodiamide, flubendiamide, fluralaner, lotilaner, tetrachlorantraniliprole, tetraniliprole; dinitrophenol insecticides:, dinex, dinoprop, dinosam, DNOC; fluorine insecticides:, barium hexafluorosilicate, cryolite, flursulamid, sodium fluoride, sodium silicofluoride, sulfluramid; formamidine insecticides:, amitraz, chlordimeform, formetanate, formparanate, medimeform, semiamitraz; fumigant insecticides:, acrylonitrile, carbon disulfide, carbon tetrachloride, carbonyl sulfide, chloroform, chloropicrin, cyanogen, p-dichlorobenzene, 1,2-dichloropropane, dimethyl disulfide, ethyl formate, ethylene dibromide, ethylene dichloride, ethylene oxide, hydrogen cyanide, methyl bromide, methyl iodide, methylchloroform, methylene chloride, naphthalene, phosphine, sodium tetrathiocarbonate, sulfuryl fluoride, tetrachloroethane; inorganic insecticides:, borax, boric acid, calcium polysulfide, copper oleate, diatomaceous earth, mercurous chloride, potassium thiocyanate, silica gel, sodium thiocyanate, see also arsenical insecticides, see also fluorine insecticides; insect growth regulators:; chitin synthesis inhibitors:, buprofezin; benzoylphenylurea chitin synthesis inhibitors:, bistrifluron, chlorbenzuron, chlorfluazuron, dichlorbenzuron, diflubenzuron, flucycloxuron, flufenoxuron, hexaflumuron, lufenuron, novaluron, noviflumuron, penfluron, teflubenzuron, triflumuron; juvenile hormone mimics:, dayoutong, epofenonane, fenoxycarb, hydroprene, kinoprene, methoprene, pyriproxyfen, triprene; juvenile hormones:, juvenile hormone I, juvenile hormone II, juvenile hormone III; moulting hormone agonists:, chromafenozide, furan tebufenozide, halofenozide, methoxyfenozide, tebufenozide, yishijing; moulting hormones:, a-ecdysone, ecdysterone; moulting inhibitors:, cyromazine, diofenolan; precocenes:, precocene I, precocene II, precocene III; unclassified insect growth regulators:, dicyclanil; isoxazoline insecticides:, afoxolaner, fluralaner, fluxametamide, isocycloseram, lotilaner, sarolaner; macrocyclic lactone insecticides:; avermectin insecticides:; avermectin insecticides:, abamectin, doramectin, emamectin, eprinomectin, ivermectin, selamectin; milbemycin insecticides:; milbemycin insecticides:, lepimectin, milbemectin, milbemycin oxime, moxidectin; spinosyn insecticides:; spinosyn insecticides:, spinetoram, spinosad; neonicotinoid insecticides:; nitroguanidine neonicotinoid insecticides:; nitroguanidine neonicotinoid insecticides:, clothianidin, dinotefuran, imidacloprid, imidaclothiz, thiamethoxam; nitromethylene neonicotinoid insecticides:, nitenpyram, nithiazine; pyridylmethylamine neonicotinoid insecticides:, acetamiprid, cycloxaprid, imidacloprid, nitenpyram, paichongding, thiacloprid; nereistoxin analogue insecticides:, bensultap, cartap, polythialan, thiocyclam, thiosultap; organochlorine insecticides:, bromo-DDT, camphechlor, DDT, pp'-DDT, DFDT, ethyl-DDD, HCH, gamma-HCH, lindane, methoxychlor, pentachlorophenol, TDE; cyclodiene insecticides:, aldrin, bromocyclen, chlorbicyclen, chlordane, chlordecone, dieldrin, dilor, endosulfan, alpha-endosulfan, endrin, HEOD, heptachlor, HHDN, isobenzan, isodrin, kelevan, mirex; organophosphorus insecticides:; organophosphate insecticides:, bromfenvinfos, calvinphos, chlorfenvinphos, crotoxyphos, dichlorvos, dicrotophos, dimethylvinphos, fospirate, heptenophos, methocrotophos, mevinphos, monocrotophos, naled, naftalofos, phosphamidon, propaphos, TEPP, tetrachlorvinphos; organothiophosphate insecticides:; organothiophosphate insecticides:, dioxabenzofos, fosmethilan, phenthoate; aliphatic organothiophosphate insecticides:, acethion, acetophos, amiton, cadusafos, chlorethoxyfos, chlormephos, demephion, demephion- O, demephion-S, demeton, demeton-O, demeton-S, demeton- methyl, demeton-O-methyl, demeton-S-methyl, demeton-S-methylsulphon, disulfoton, ethion, ethoprophos, IPSP, isothioate, malathion, methacrifos, methylacetophos, oxydemeton-methyl, oxydeprofos, oxydisulfoton, phorate, sulfotep, terbufos, thiometon; aliphatic amide organothiophosphate insecticides:, amidithion, cyanthoate, dimethoate, ethoate-methyl, formothion, mecarbam, omethoate, prothoate, sophamide, vamidothion; oxime organothiophosphate insecticides:, chlorphoxim, phoxim, phoxim-methyl; heterocyclic organothiophosphate insecticides:, azamethiphos, colophonate, coumaphos, coumithoate, dioxathion, endothion, menazon, morphothion, phosalone, pyraclofos, pyrazothion, pyridaphenthion, quinothion; benzothiopyran organothiophosphate insecticides:, dithicrofos, thicrofos; benzotriazine organothiophosphate insecticides:, azinphos-ethyl, azinphos-methyl; isoindole organothiophosphate insecticides:, dialifos, phosmet; isoxazole organothiophosphate insecticides:, isoxathion, zolaprofos; pyrazolopyrimidine organothiophosphate insecticides:, chlorprazophos, pyrazophos; pyridine organothiophosphate insecticides:, chlorpyrifos, chlorpyrifos-methyl; pyrimidine organothiophosphate insecticides:, butathiofos, diazinon, etrimfos, lirimfos, pirimioxyphos, pirimiphos-ethyl, pirimiphos- methyl, primidophos, pyrimitate, tebupirimfos; quinoxaline organothiophosphate insecticides:, quinalphos, quinalphos-methyl; thiadiazole organothiophosphate insecticides:, athidathion, lythidathion, methidathion, prothidathion; triazole organothiophosphate insecticides:, isazofos, triazophos; phenyl organothiophosphate insecticides:, azothoate, bromophos, bromophos-ethyl, carbophenothion, chlorthiophos, cyanophos, cythioate, dicapthon, dichlofenthion, etaphos, famphur, fenchlorphos, fenitrothion, fensulfothion, fenthion, fenthion-ethyl, heterophos, jodfenphos, mesulfenfos, parathion, parathion-methyl, phenkapton, phosnichlor, profenofos, prothiofos, sulprofos, temephos, trichlormetaphos-3, trifenofos, xiaochongliulin; phosphonate insecticides:, butonate, trichlorfon; phosphonothioate insecticides:, mecarphon; phenyl ethylphosphonothioate insecticides:, fonofos, trichloronat; phenyl phenylphosphonothioate insecticides:, cyanofenphos, EPN, leptophos; phosphoramidate insecticides:, crufomate, fenamiphos, fosthietan, mephosfolan, phosfolan, phosfolan-methyl, pirimetaphos; phosphoramidothioate insecticides:, acephate, chloramine phosphorus, isocarbophos, isofenphos, isofenphos-methyl, methamidophos, phosglycin, propetamphos; phosphorodiamide insecticides:, dimefox, mazidox, mipafox, schradan; oxadiazine insecticides:, indoxacarb; oxadiazolone insecticides:, metoxadiazone; phthalimide insecticides:, dialifos, phosmet, tetramethrin; physical insecticides:, maltodextrin; desiccant insecticides:, boric acid, diatomaceous earth, silica gel; pyrazole insecticides:, dimetilan, isolan; phenylpyrazole insecticides:, pyraclofos, pyrolan; (IRAC MoA group 2B):, acetoprole, ethiprole, fipronil, flufiprole, pyrafluprole, pyriprole, vaniliprole; pyrazolecarboxamide insecticides:, dimpropyridaz, tebufenpyrad, tolfenpyrad; pyridylpyrazole insecticides:, chlorantraniliprole, cyantraniliprole, cyclaniliprole, tetrachlorantraniliprole, tetraniliprole, tyclopyrazoflor; pyrethroid insecticides:; pyrethroid ester insecticides:, acrinathrin, allethrin, bioallethrin, esdepallethrine, barthrin, bifenthrin, kappa- bifenthrin, bioethanomethrin, brofenvalerate, brofluthrinate, bromethrin, butethrin, chlorempenthrin, cyclethrin, cycloprothrin, cyfluthrin, beta-cyfluthrin, cyhalothrin, gamma-cyhalothrin, lambda-cyhalothrin, cypermethrin, alpha- cypermethrin, beta-cypermethrin, theta-cypermethrin, zeta-cypermethrin, cyphenothrin, deltamethrin, dimefluthrin, dimethrin, empenthrin, d-fanshiluquebingjuzhi, chloroprallethrin, fenfluthrin, fenpirithrin, fenpropathrin, fenvalerate, esfenvalerate, flucythrinate, fluvalinate, tau-fluvalinate, furamethrin, furethrin, heptafluthrin, imiprothrin, japothrins, kadethrin, methothrin, metofluthrin, epsilon-metofluthrin, momfluorothrin, epsilon-momfluorothrin, pentmethrin, permethrin, biopermethrin, transpermethrin, phenothrin, prallethrin, profluthrin, proparthrin, pyresmethrin, renofluthrin, meperfluthrin, resmethrin, bioresmethrin, cismethrin, tefluthrin, kappa-tefluthrin, terallethrin, tetramethrin, tetramethylfluthrin, tralocythrin, tralomethrin, transfluthrin, valerate; pyrethroid ether insecticides:, etofenprox, flufenprox, halfenprox, protrifenbute, silafluofen; pyrethroid oxime insecticides:, sulfoxime, thiofluoximate; pyrimidinamine insecticides:, flufenerim, pyrimidifen; pyrrole insecticides:, chlorfenapyr; quaternary ammonium insecticides:, sanguinarine; sulfoximine insecticides:, sulfoxaflor; tetramic acid insecticides:, spiropidion, spirotetramat; tetronic acid insecticides:, spiromesifen; thiazole insecticides:, clothianidin, imidaclothiz, thiamethoxam, thiapronil; thiazolidine insecticides:, tazimcarb, thiacloprid; thiourea insecticides:, diafenthiuron; urea insecticides:, flucofuron, sulcofuron, see also chitin synthesis inhibitors; zwitterionic insecticides:, dicloromezotiaz, triflumezopyrim; unclassified insecticides:, afidopyropen, allosamidin, benzpyrimoxan, closantel, copper naphthenate, crotamiton, EXD, fenazaflor, fenoxacrim, flometoquin, flonicamid, fluhexafon, flupyradifurone, flupyrimin, hydramethylnon, isoprothiolane, jiahuangchongzong, malonoben, metaflumizone, nifluridide, oxazosulfyl, plifenate, pyridaben, pyridalyl, pyrifluquinazon, rafoxanide, thuringiensin, triarathene, triazamate.

In an embodiment, the herbicide may be selected from organic or inorganic herbicide, natural or synthetic herbicide such as those selected from but not limited to: Lipid Synthesis Inhibitors like ACCase Inhibitors, Arylphenoxy propionate e.g. Quizalafop), Cyclohexanedione e.g. Clethodim; Aminoacid synthesis inhibitors like ALS Inhibitors, sulfonylureas e.g. chlorimuron foramsulfuron, halosulfuron, iodosulfuron, nicosulfuron, primisulfuron, prosulfuron,, rimsulfuron, thifensulfuron, tribenuron, Imidazolinone e.g. imazamox, imazaquin, imazethapyr, Triazoloyrimidine e.g. flumetsulam, cloransulam, thiencarbazone, EPSP Inhibitors, glyphosate; Growth regulators, specific unknown sites, Phenoxy e.g. 2,4-D, benzoic acid e.g. dicamba, Carboxylic acid e.g. clopyralid, fluroxypyr, Auxin Trasnport, Semicarbazone e.g. diflufenzopyr; Photosynthesis Inhibitors, PS II Inhibitors, Triazine e.g. Atrazine, Simazine, Triazinone e.g. Metribuzin, PS II Inhibitors Nitrile e.g. bromoxynil, Benzothiadiazole e.g. bentazon, Ureas e.g. linuron; Glutamine Synthesis Inhibitors e.g. Glufosinate; Pigment Inhibitors, Diterpene Synthesis Inhibitors, Isoxazolidinone e.g. Clomazone, HPPD Inhibitors, Isoxazole e.g. isoxaflutole, Pyrazolone e.g. topramezone, Triketone e.g. mesotrione, tembotrione; Cell Membrane Disrupters: PPO Inhibitors: Diphenylether e.g. acifluorfen, fomesafen, actofen, N-phenylphthalimide e.g. flumiclorac, flumioxazin, Aryl triazinone e.g. sulfentrazone, carfentrazone, fluthiacet-ethy, Pyrimidinedione e.g. saflufenacil, Photosystem I Electron Diverter: Bipyridilium e.g. paraquat; Seedling Root Growth Inhibitors: Microtubule Inhibitors: Dinitroaniline e.g. thalfluralin, pendimethalin, trifluralin; Seedling Shoot Growth Inhibitors: Lipid Synthesis Inhibitors (non Accase): Thiocarbamate e.g. butylate, EPTC, Long Chain Fatty Acid Inhibitors: Chloroacetamide e.g. acetochlor, alachlor, metolachlor, dimethenamid, Oxyacetamide e.g. flufenacet, Pyrazole e.g. pyroxasulfone.

In an embodiment, the fungicide may be selected from organic or inorganic fungicide, natural or synthetic fungicide such as those selected from but not limited to: aliphatic nitrogen fungicides: butylamine, cymoxanil, dodicin, dodine, guazatine, iminoctadine; amide fungicides: carpropamid, chloraniformethan, cyflufenamid, diclocymet, diclocymet, dimoxystrobin, fenaminstrobin, fenoxanil, flumetover, isofetamid, mandestrobin, mandipropamid, metominostrobin, orysastrobin, prochloraz, quinazamid, silthiofam, triforine; acylamino acid fungicides: benalaxyl, benalaxyl-M, furalaxyl, metalaxyl, metalaxyl-M, pefurazoate, valifenalate; anilide fungicides: benalaxyl, benalaxyl-M, bixafen, boscalid, carboxin, fenhexamid, fluxapyroxad, isotianil, metalaxyl, metalaxyl-M, metsulfovax, ofurace, oxadixyl, oxycarboxin, penflufen, pyracarbolid, pyraziflumid, sedaxane, thifluzamide, tiadinil, vanguard; benzanilide fungicides: benodanil, flutolanil, mebenil, mepronil, salicylanilide, tecloftalam; furanilide fungicides: fenfuram, furalaxyl, furcarbanil, methfuroxam; sulfonanilide fungicides: flusulfamide; benzamide fungicides: benzohydroxamic acid, fluopicolide, fluopimomide, fluopyram, tioxymid, trichlamide, zarilamid, zoxamide; furamide fungicides: cyclafuramid, furmecyclox; phenylsulfamide fungicides: dichlofluanid, tolylfluanid; picolinamide fungicides: fenpicoxamid, florylpicoxamid; pyrazolecarboxamide fungicides: benzovindiflupyr, bixafen, fluindapyr, fluxapyroxad, furametpyr, isopyrazam, penflufen, penthiopyrad, pydiflumetofen, pyrapropoyne, sedaxane; sulfonamide fungicides: amisulbrom, cyazofamid; valinamide fungicides: benthiavalicarb, iprovalicarb; antibiotic fungicides: aureofungin, blasticidin-S, cycloheximide, fenpicoxamid, griseofulvin, kasugamycin, moroxydine, natamycin, ningnanmycin, polyoxins, polyoxorim, streptomycin, validamycin; strobilurin fungicides: fluoxastrobin, mandestrobin, pyribencarb; methoxyacrylate strobilurin fungicides: azoxystrobin, bifujunzhi, coumoxystrobin, enoxastrobin, flufenoxystrobin, jiaxiangjunzhi, picoxystrobin, pyraoxystrobin; methoxycarbanilate strobilurin fungicides: pyraclostrobin, pyrametostrobin, triclopyricarb; methoxyiminoacetamide strobilurin fungicides: dimoxystrobin, fenaminstrobin, metominostrobin, orysastrobin; methoxyiminoacetate strobilurin fungicides: kresoxim-methyl, trifloxystrobin; aromatic fungicides: biphenyl, chlorodinitronaphthalenes, chloroneb, chlorothalonil, cresol, dicloran, fenjuntong, hexachlorobenzene, pentachlorophenol, quintozene, sodium pentachlorophenate, tecnazene, thiocyanatodinitrobenzenes, trichlorotrinitrobenzenes; arsenical fungicides: asomate, urbacide; aryl phenyl ketone fungicides: metrafenone, pyriofenone; benzimidazole fungicides: albendazole, benomyl, carbendazim, chlorfenazole, cypendazole, debacarb, fuberidazole, mecarbinzid, rabenzazole, thiabendazole; benzimidazole precursor fungicides: furophanate, thiophanate, thiophanate-methyl; benzothiazole fungicides: bentaluron, benthiavalicarb, benthiazole, chlobenthiazone, dichlobentiazox, probenazole; botanical fungicides: allicin, berberine, carvacrol, carvone, osthol, sanguinarine, santonin; bridged diphenyl fungicides: bithionol, dichlorophen, diphenylamine, hexachlorophene, parinol; carbamate fungicides: benthiavalicarb, furophanate, iodocarb, iprovalicarb, picarbutrazox, propamocarb, pyribencarb, thiophanate, thiophanate-methyl, tolprocarb; benzimidazolylcarbamate fungicides: albendazole, benomyl, carbendazim, cypendazole, debacarb, mecarbinzid; carbanilate fungicides: diethofencarb, pyraclostrobin, pyrametostrobin, triclopyricarb; conazole fungicides (imidazoles): climbazole, clotrimazole, imazalil, oxpoconazole, prochloraz, triflumizole; conazole fungicides (triazoles): azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, ipfentrifluconazole, mefentrifluconazole, metconazole, myclobutanil, penconazole, propiconazole, prothioconazole, quinconazole, simeconazole, tebuconazole, tetraconazole, triadimefon, triadimenol, triticonazole, uniconazole, uniconazole-P; copper fungicides: acypetacs-copper, basic copper carbonate, basic copper sulfate, Bordeaux mixture, Burgundy mixture, Cheshunt mixture, copper acetate, copper hydroxide, copper naphthenate, copper oleate, copper oxychloride, copper silicate, copper sulfate, copper zinc chromate, cufraneb, cuprobam, cuprous oxide, mancopper, oxine-copper, saisentong, thiodiazole-copper; cyanoacrylate fungicides: benzamacril, phenamacril; dicarboximide fungicides: famoxadone, fluoroimide; dichlorophenyl dicarboximide fungicides: chlozolinate, dichlozoline, iprodione, isovaledione, myclozolin, procymidone, vinclozolin; phthalimide fungicides: captafol, captan, ditalimfos, folpet, thiochlorfenphim; dinitrophenol fungicides: binapacryl, dinobuton, dinocap, dinocap-4, dinocap-6, meptyldinocap, dinocton, dinopenton, dinosulfon, dinoterbon, DNOC; dithiocarbamate fungicides: amobam, asomate, azithiram, carbamorph, cufraneb, cuprobam, disulfiram, ferbam, metam, nabam, tecoram, thiram, urbacide, ziram; cyclic dithiocarbamate fungicides: dazomet, etem, milneb; polymeric dithiocarbamate fungicides: mancopper, mancozeb, maneb, metiram, polycarbamate, propineb, zineb; dithiolane fungicides: isoprothiolane, saijunmao; fumigant fungicides: carbon disulfide, cyanogen, dimethyl disulfide, methyl bromide, methyl iodide, sodium tetrathiocarbonate; hydrazide fungicides: benquinox, saijunmao; imidazole fungicides: cyazofamid, fenamidone, fenapanil, glyodin, iprodione, isovaledione, pefurazoate, triazoxide; conazole fungicides (imidazoles): climbazole, clotrimazole, imazalil, oxpoconazole, prochloraz, triflumizole; inorganic fungicides: potassium azide, potassium thiocyanate, sodium azide, sulfur, see also copper fungicides, see also inorganic mercury fungicides; inorganic mercury fungicides: mercuric chloride, mercuric oxide, mercurous chloride; organomercury fungicides: (3-ethoxypropyl)mercury bromide, ethylmercury acetate, ethylmercury bromide, ethylmercury chloride, ethylmercury 2,3-dihydroxypropyl mercaptide, ethylmercury phosphate, N-(ethylmercury)-p-toluenesulfonanilide, hydrargaphen, 2-methoxyethylmercury chloride, methylmercury benzoate, methylmercury dicyandiamide, methylmercury pentachlorophenoxide, 8-phenylmercurioxyquinoline, phenylmercuriurea, phenylmercury acetate, phenylmercury chloride, phenylmercury derivative of pyrocatechol, phenylmercury nitrate, phenylmercury salicylate, thiomersal, tolylmercury acetate; morpholine fungicides, aldimorph, benzamorf, carbamorph, dimethomorph, dodemorph, fenpropimorph, flumorph, tridemorph; organophosphorus fungicides, ampropylfos, ditalimfos, EBP, edifenphos, fosetyl, hexylthiofos, inezin, iprobenfos, izopamfos, kejunlin, phosdiphen, pyrazophos, tolclofos-methyl, triamiphos; organotin fungicides: decafentin, fentin, tributyltin oxide; oxathiin fungicides: carboxin, oxycarboxin; oxazole fungicides: chlozolinate, dichlozoline, drazoxolon, famoxadone, fluoxapiprolin, hymexazol, metazoxolon, myclozolin, oxadixyl, oxathiapiprolin, pyrisoxazole, vinclozolin; polysulfide fungicides: barium polysulfide, calcium polysulfide, potassium polysulfide, sodium polysulfide; pyrazole fungicides: oxathiapiprolin, fluoxapiprolin, rabenzazole; phenylpyrazole fungicides: fenpyrazamine, metyltetraprole, pyraclostrobin, pyrametostrobin, pyraoxystrobin; pyrazolecarboxamide fungicides: benzovindiflupyr, bixafen, fluindapyr, fluxapyroxad, furametpyr, inpyrfluxam, isoflucypram, isopyrazam, penflufen, penthiopyrad, pydiflumetofen, sedaxane; pyridazine fungicides: pyridachlometyl; pyridine fungicides: aminopyrifen, boscalid, buthiobate, dipyrithione, fluazinam, fluopicolide, fluopyram, parinol, picarbutrazox, pyribencarb, pyridinitril, pyrifenox, pyrisoxazole, pyroxychlor, pyroxyfur, triclopyricarb; pyrimidine fungicides: bupirimate, diflumetorim, dimethirimol, ethirimol, fenarimol, ferimzone, nuarimol, triarimol; anilinopyrimidine fungicides: cyprodinil, mepanipyrim, pyrimethanil; pyrrole fungicides: dimetachlone, fenpiclonil, fludioxonil, fluoroimide; quaternary ammonium fungicides: berberine, sanguinarine; quinoline fungicides: ethoxyquin, halacrinate, 8-hydroxyquinoline sulfate, ipflufenoquin, quinacetol, quinofumelin, quinoxyfen, tebufloquin; quinone fungicides: chloranil, dichlone, dithianon; quinoxaline fungicides: chinomethionat, chlorquinox, thioquinox; tetrazole fungicides: metyltetraprole, picarbutrazox; thiadiazole fungicides: etridiazole, saisentong, thiodiazole-copper, zinc thiazole; thiazole fungicides: dichlobentiazox, ethaboxam, fluoxapiprolin, isotianil, metsulfovax, octhilinone, oxathiapiprolin, thiabendazole, thifluzamide; thiazolidine fungicides: flutianil, thiadifluor; thiocarbamate fungicides: methasulfocarb, prothiocarb; thiophene fungicides: ethaboxam, isofetamid, silthiofam; triazine fungicides: anilazine; triazole fungicides: amisulbrom, bitertanol, fluotrimazole, triazbutil; conazole fungicides (triazoles): azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, huanjunzuo, imibenconazole, ipconazole, metconazole, myclobutanil, penconazole, propiconazole, prothioconazole, quinconazole, simeconazole, tebuconazole, tetraconazole, triadimefon, triadimenol, triticonazole, uniconazole, uniconazole-P; triazolopyrimidine fungicides: ametoctradin; urea fungicides: bentaluron, pencycuron, quinazamid; zinc fungicides: acypetacs-zinc, copper zinc chromate, cufraneb, mancozeb, metiram, polycarbamate, polyoxorim-zinc, propineb, zinc naphthenate, zinc thiazole, zinc trichlorophenate, zineb, ziram; unclassified fungicides: acibenzolar, acypetacs, allyl alcohol, benzalkonium chloride, bethoxazin, bromothalonil, chitosan, chloropicrin, DBCP, dehydroacetic acid, diclomezine, diethyl pyrocarbonate, dipymetitrone, ethylicin, fenaminosulf, fenitropan, fenpropidin, formaldehyde, furfural, hexachlorobutadiene, methyl isothiocyanate, nitrostyrene, nitrothal-isopropyl, OCH, pentachlorophenyl laurate, 2-phenylphenol, phthalide, piperalin, propamidine, proquinazid, pyroquilon, sodium o-phenylphenoxide, spiroxamine, sultropen, thicyofen, tricyclazole.

In an embodiment, the bactericide may be selected from organic or inorganic bactericide, natural or synthetic bactericide such as those selected from but not limited to: am i earth i azo I, bismerthiazol, bronopol, cellocidin, chloramphenicol, copper hydroxide, cresol, dichlorophen, dipyrithione, dodicin, ethylicin, fenaminosulf, fluopimomide, formaldehyde, hexachlorophene, hydrargaphen, 8- hydroxyquinoline sulfate, kasugamycin, ningnanmycin, nitrapyrin, octhilinone, oxolinic acid, oxytetracycline, phenazine oxide, probenazole, saijunmao, saisentong, streptomycin, tecloftalam, thiodiazole-copper, thiomersal, xinjunan, zinc thiazole.

In an embodiment, the biological control agent or bio stimulating agent may be a living microbe or its extract or combination thereof. The biological agent may be selected from but not limited to, the group comprising:

*Ampelomyces quisqualis; Aspergillus flavus; Aureobasidium pullulans; Bacillus amyloliquefaciens; Bacillus mojavensis; Bacillus pumilus; Bacillus simplex; Bacillus solisalsi; Bacillus subtilis; Bacillus subtilis var. amyloliquefaciens; Candida oleophila, or C. saitoana; Clavibacter michiganensis (bacteriophages); Coniothyrium minitans; Cryphonectria parasitica; Cryptococcus albidus; Dilophosphora alopecuri; Fusarium oxysporum; Clonostachys rosea f. catenulate (also named Gliocladium catenulatum); Gliocladium roseum; Lysobacter antibioticus, orL. enzymogenes; Metschnikowia fructicola; Microdochium dimerum; Microsphaeropsis ochracea; Muscodor albus; Paenibacillus polymyxa; Pantoea vagans; Phlebiopsis gigantea; Pseudomonas sp., or Pseudomonas chloraphis; Pseudozyma flocculosa; Pichia anomala; Pythium oligandrum; Sphaerodes mycoparasitica; Streptomyces griseoviridis, S. lydicus, or S. violaceusniger; Talaromyces flavus; Trichoderma asperellum, T. atroviride, T. fertile, T. gamsii, T. harmatum, T. harzianum, T. stromaticum, T. virens (also named Gliocladium virens), T. viride, or mixture of T. harzianum and T. viride, or mixture of T. polysporum and T. harzianum; Typhula phacorrhiza; Ulocladium oudemansii; Verticillium dahlia; zucchini yellow mosaic virus (avirulent strain); Agro bacterium radiobacter; Bacillus cereus; Bacillus firmus; Bacillus thuringiensis, B. t. ssp. aizawai, B. t. ssp. israelensis, B. t. ssp. galleriae, B. t. ssp. kurstaki, or B. t. ssp. tenebrionis; Beauveria bassiana, or B. brongniartii; Burkholderia sp.; Chromobacterium subtsugae; Cydia pomonella granulosis virus; Cryptophlebia leucotreta granulovirus (CrleGV); Isaria fumosorosea; Heterorhabditis bacteriophora; Lecanicillium longisporum, or L. muscarium (formerly Verticillium lecanii); Metarhizium anisopliae, or M. anisopliae var. acridum; Nomuraea rileyi; Paecilomyces fumosoroseus, or P. lilacinus; Paenibacillus popilliae; Pasteuria spp., P. nishizawae, P. penetrans, P. ramose, P. reneformis, P. thornea, or P. usgae; Pseudomonas fluorescens; Steinemema carpocapsae, S. feltiae, or S. kraussei; Azospirillum amazonense, A. brasilense, A. lipoferum, A. irakense, or A. halopraeferens; Bradyrhizobium sp., B. elkanii, B. japonicum, B. liaoningense, or B. lupini; Delftia acidovorans;* VA mycorrhiza selected from the genera Glomus, *Acaulospora, Entrophosphora, Gigaspora, Scutellospora and Sclerocytis;* VA mycorrhiza selected from the group consisting of *Glomus fasciculatum, G. caledonium, G. mosseae, G. versiforme, G. intraradices and G. etunicatum; Mesorhizobium sp.; Paenibacillus alvei; Penicillium bilaiae; Rhizobium leguminosarum bv. phaseoli, R. I. trifolii, R. I. bv. viciae, or R. tropic!, (L90) Sinorhizobium meliloti; Enterobacter spp., E. ludwigii, E. aerogenes, E. amnigenus, E. agglomerans, E. arachidis, E. asburiae, E. cancerogenous, E. cloacae, E. cowanii, E. dissolvens, E. gergoviae, E. helveticus, E. hormaechei, E. intermedius, E. kobei, E. mori, E. nimipressuralis, E. oryzae, E. pulveris, E. pyrinus, E. radicincitans, E. taylorae, E. turicensis, orE. sakazakii,.; Oxalobacteraceae spp., Herbaspirillum seropedicae* (free-living nitrogen fixing bacterium), Janthinobacterium lividum or Pseudoduganella violaceinigra; Siderophores, bacillibactin; antibiotiics such as zwittermicin-A, kanosamine, polyoxine, bacilysin, violacein (L95) enzymes such as alpha-amylase, chitinases, pektinases, phosphatase (acid and alkaline) and phytase; phytohormones and precursors thereof and volatile compounds, such as auxines, gibberellin-like substances, cytokinin-like compounds, acetoin, 2,3-butanediol, ethylene, indole acetic acid; lipopeptides such as iturins, plipastatins, surfactins, agrastatin, agrastatin A, bacillomycin, bacillomycin D, fengycin; antibacterial polyketides such as difficidin, macrolactin and bacilaene; antifungal metabolites such as pyrones, cytosporone, 6- pentyl-2H-pyran-2-one (also termed 6-pentyl-a-pyrone), koninginins (complex pyranes), in particular those metabolites produced by Trichoderma species.

The preferred embodiments of the present invention can provide a method of growing seeds or seedlings with a super absorbent polymeric foam with a reduced amount of water.

Advantageously the present invention is used for seedling production and/or transplantation. The present method is effectively used in agriculture as demonstrated in the examples. The present compositions having high water retention capacity and nutrients enhance the growth of seed or seedlings. Further, the present invention provides a ready mix composition comprising a foam and super absorbent polymer for growing seed or seedlings.

The present invention provides a method of cultivation of plants, said method comprising:
a) contacting seeds or implantation of seedlings with the composition of the present invention, which comprises super absorbent foam and
b) watering the super absorbent polymer foam.

Preferably, said method comprises:
a) inserting seeds or implantation of seedlings with soil in the cavity of bricks provided with a composition comprising super absorbent foam in accordance with the present invention; and
b) watering the super absorbent polymer foam bricks.

The method of the present invention can improve the delivery of a bioactive ingredient to seeds or seedlings.

In an embodiment of the disclosure, a kit-of-parts comprises a plurality of components, wherein said plurality of components comprises: a super absorbent foam and a bioactive agent and optionally fertilizers.

The kit-of-parts may comprise an instructions manual, said instructions manual comprising instructions directing a user to apply the components for seedlings.

The following examples are meant to illustrate the present invention. The examples are presented to exemplify the invention and are not to be considered as limiting the scope of the present invention.

### EXAMPLES

### Example 1:

### Method of preparing a super absorbent foam

Two separate feed tanks were prepared. Suitable polyols were fed into the feed tank 1. Suitable isocyanate was supplied into the feed tank 2 along with the desired super absorbent polymer. Note that the super absorbent polymer could also be fed into the feed tank 1 or to both the feed tanks. A proper mixture was prepared by mixing the feeds of tank 1 and tank 2. Typically, a high impingement type mixing head may be used. The mixed material was then delivered into a mold at a low pressure, where the material reaction and curing was allowed to occur. The material was removed for cooling and shrinking. The super absorbent material was trimmed if required and shaped in the form of a brick of 1 cubic metre volume. Each brick could be cut into several smaller bricks if required.

In an embodiment, other polymer forming monomers instead of isocyanate and polyols could be used. In this embodiment, the super absorbent polymer may be mixed with either or both of the foam-forming monomers. The choice of these monomers is not particularly restricting and is well known conventionally.

Therefore, in an embodiment, the present invention provides a process for preparing a super absorbent foam, said process comprising reacting a first foam forming monomer with a second foam forming monomer, wherein at least one or both of said monomers comprises at least one super absorbent polymer.

### Example 2:

### Field trial data

Sugarcane chips or seedlings were inserted in the super absorbent polymer foam with objective to analyze the longevity of the plants in the situation of water scarcity, in a control humid environment. (Fig,1).

Study was conducted for 20 days to observe if there is any effect on the survival rate of seedling in these composition without any further irrigation.

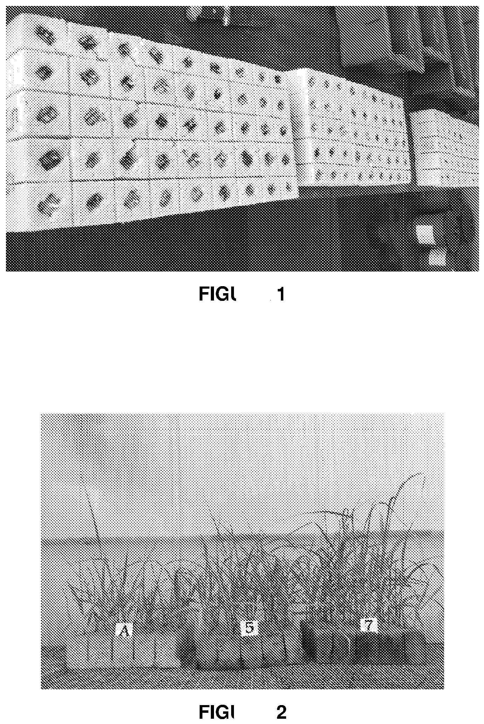

The seedlings of 30 days were produced in three different samples, sample A (untreated) and sample 5 (super absorbent polymer foam with 4.5 kg/m3) and sample 7 (super absorbent polymer foam with 2.2 kg/m3). (Fig. 2).

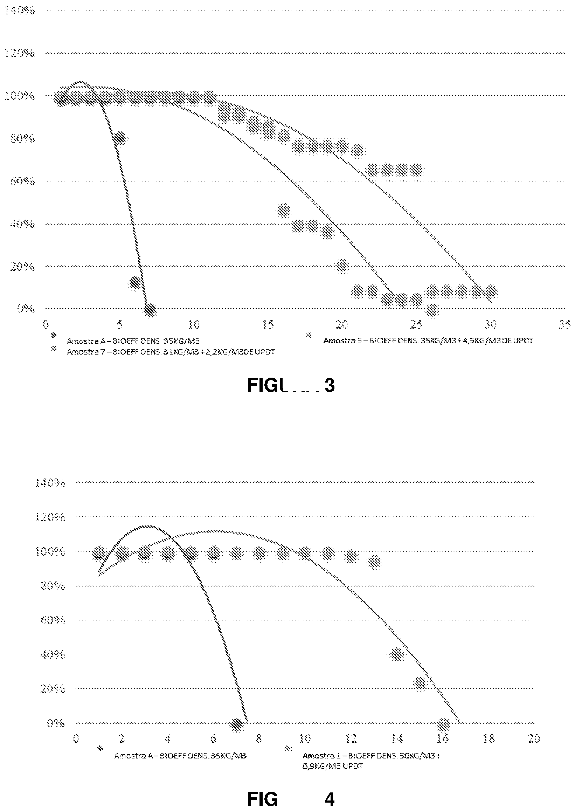

Effect of present super absorbent polymer biofoam on seedling is represented in table below and figure 3.

**Table 1**

| Day 1 | | | | | |
|---|---|---|---|---|---|
| Sample No. | Not germinated (%) | Vigorous (%) | Withered (%) | Dried (%) | Fallen (%) |
| A | 0 | 72 | 0 | 0 | 28 |
| Sample 5 | 4.4 | 95.5 | 0 | 0 | 0 |
| Sample 7 | 0 | 97.7 | 0 | 0 | 2.2 |

| Day 5 | | | | | |
|---|---|---|---|---|---|
| A | 0 | 0 | 8 | 76 | 16 |
| Sample 5 | 4.4 | 88.9 | 6.7 | 0 | 0 |
| Sample 7 | 0 | 95.5 | 2.2 | 0 | 2.2 |

| Day 11 | | | | | |
|---|---|---|---|---|---|
| A | 0 | 0 | 0 | 100 | 0 |
| Sample 5 | 4.4 | 71.1 | 20 | 4.4 | 0 |
| Sample 7 | 0 | 84.4 | 4.4 | 8.8 | 2.2 |

| Day 16 | | | | | |
|---|---|---|---|---|---|
| A | 0 | 0 | 0 | 100 | 0 |
| Sample 5 | 4.4 | 0 | 37.8 | 57.7 | 0 |
| Sample 7 | 0 | 73.3 | 4.4 | 22.2 | 0 |

| Day 20 | | | | | |
|---|---|---|---|---|---|
| A | 0 | 0 | 0 | 100 | 0 |
| Sample 5 | 4.4 | 0 | 8.8 | 86.6 | 0 |
| Sample 7 | 0 | 55.5 | 20 | 24.4 | 0 |

### Example 3

Study was conducted for 45 days to observe if there is any effect on the survival rate of seedlings in these composition without any further irrigation.

Sample A (untreated) and 1 (Super absorbent polymer (0.9 kg/m3) and biofoam (50 kg/m3)). 45 days seedling was observed under this:

Figure 4: Samples force (%) over the period - Test 1 (Seedlings of 45 days), 16 days samples were observed without irrigation.

### Example 4

### Water retention capacity evaluation

Water retention test was conducted using different compositions of super absorbent polymer and biofoam as per below table:

**Table 2**

| Description of Samples | | | |
|---|---|---|---|
| Sample | Super absorbent polymer Granule size | Super absorbent polymer Concentration (kg | Bio-foam Density (kg) |
| 0 | Powder | - | 12 |
| 1 | Powder | 1 | 15 |
| 2 | Powder | 2 | 17 |
| 3 | Powder | 6 | 13 |
| 4 | SP | 4 | 15 |
| 5 | SP | 6 | 11 |
| 6 | SP | 12 | 11 |
| 7 | SP | 6 | 11 |
| 8 | SP | 12 | 11 |
| 9 | XL | 12 | 11 |

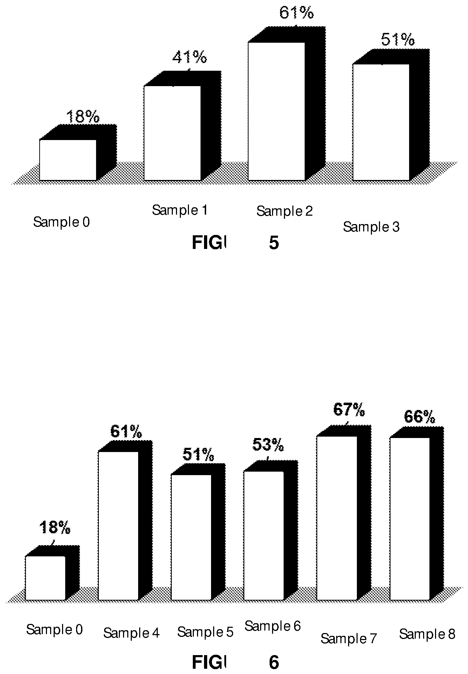

Figure 5: Percentage of retained water Biofoam and super absorbent polymer in powder form.

Figure 6 Percentage of retained water Biofoam and super absorbent polymer in medium granule form.

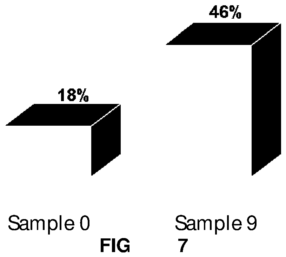

Figure 7: Percentage of retained water Biofoam and super absorbent polymer in large granule form.

### Conclusion:

It was observed that when super absorbent polymer is mixed with biofoam the water retention capacity of the composition increases (4 times). Thus, super absorbent polymer foam increases the survival rate of seedlings without water and also enhances the root growth in the plants.

## Claims

1. A composition comprising a super absorbent polymer, wherein the super absorbent polymer is starch-g-poly(2-propenamide-co-2-propanoic acid) potassium salt, and a polyurethane based biofoam.

2. The composition according to claim 1, wherein said foam comprises a super absorbent polymer forming a super absorbent foam.

3. The composition according to claim 2, wherein the super absorbent polymer is entrapped in air spaces of the foam.

4. The composition according to claim 1 further comprising a bioactive agent.

5. The composition according to claim 4, wherein the bioactive agent is selected from a herbicide, a fungicide, an insecticide, a bio stimulant, a fertilizer, a microbial cell or combinations thereof.

6. A method of cultivation of plants comprising:
a. contacting seeds or implantation of seedlings with the composition as defined in any one of claims 1 to 5; and
b. watering said composition.

7. The method according to claim 6, said method comprising:
a. inserting seeds or implantation of seedlings with soil in a cavity of bricks provided with a composition comprising super absorbent foam claimed in claim 2; and
b. watering the super absorbent polymer foam bricks.

8. The method according to claim 6 or 7 wherein said composition further comprises a bioactive agent.

## Patentansprüche

1. Zusammensetzung, umfassend ein superabsorbierendes Polymer, wobei das superabsorbierende Polymer Stärke-g-Poly-(2-propenamid-co-2-propionsäure)-Kaliumsalz ist, und einen Bioschaum auf Polyurethan-Basis.

2. Zusammensetzung nach Anspruch 1, wobei der Schaum ein superabsorbierendes Polymer umfasst, das einen superabsorbierenden Schaum bildet.

3. Zusammensetzung nach Anspruch 2, wobei das superabsorbierende Polymer in Luftzwischenräumen des Schaums eingeschlossen ist.

4. Zusammensetzung nach Anspruch 1, ferner umfassend ein bioaktives Mittel.

5. Zusammensetzung nach Anspruch 4, wobei das bioaktive Mittel aus einem Herbizid, einem Fungizid, einem Insektizid, einem Biostimulator, einem Düngemittel, einer mikrobiellen Zelle oder Kombinationen davon ausgewählt ist.

6. Verfahren zur Kultivierung von Pflanzen, umfassend:
a. Inkontaktbringen von Saatgut oder einer Einpflanzung von Sämlingen mit der wie in einem der Ansprüche 1 bis 5 definierten Zusammensetzung und
b. Bewässern der Zusammensetzung.

7. Verfahren nach Anspruch 6, wobei das Verfahren umfasst:
a. Einsetzen von Saatgut oder einer Einpflanzung von Sämlingen in Erde in einer Aussparung von Steinen, die mit einer Zusammensetzung, umfassend superabsorbierenden Schaum, nach Anspruch 2 versehen ist; und
b. Bewässern der Steine mit superabsorbierendem Polymerschaum.

8. Verfahren nach Anspruch 6 oder 7, wobei die Zusammensetzung ferner ein bioaktives Mittel umfasst.

## Revendications

1. Une composition comprenant un polymère superabsorbant, dans laquelle le polymère superabsorbant est un amidon-g-poly(acide 2-propénamide-co-2-propanoïque), sel de potassium, et une mousse bio à base de polyuréthane.

2. La composition selon la revendication 1, dans laquelle ladite mousse comprend un polymère superabsorbant formant une mousse superabsorbante.

3. La composition selon la revendication 2, dans laquelle le polymère superabsorbant est piégé dans des espaces d'air de la mousse.

4. La composition selon la revendication 1 comprenant en outre un agent bioactif.

5. La composition selon la revendication 4, dans laquelle l'agent bioactif est sélectionné parmi un herbicide, un fongicide, un insecticide, un biostimulant, un engrais, une cellule microbienne ou des combinaisons de ces derniers.

6. Un procédé de culture de plantes comprenant :
a. la mise en contact de graines ou d'implantation de semis avec la composition, comme défini dans l'une quelconque des revendications 1 à 5 ; et
b. l'arrosage de ladite composition.

7. Le procédé selon la revendication 6, ledit procédé comprenant :
a. l'introduction de graines ou d'implantation de semis avec de la terre dans une cavité de briques munie d'une composition comprenant une mousse superabsorbante revendiquée dans la revendication 2 ; et
b. l'arrosage des briques de mousse de polymère superabsorbant.

8. Le procédé selon la revendication 6 ou 7, dans lequel ladite composition comprend en outre un agent bioactif.
